# EUROPEAN PATENT APPLICATION

(11) **EP 4 766 026 A1**
(43) Date of publication of application: **24.06.2026**
(21) Application number: 24221091.2
(22) Date of filing: 18.12.2024
(51) Int. Cl.: H05B 47/105, G05B 13/02, G05B 15/02, H05B 47/20, H05B 45/18, H05B 45/56, H05B 45/59, H05B 47/18, H05B 47/28

(54) **BUILDING INFRASTRUCTURE MANAGEMENT SYSTEM AND METHOD**

(71) Applicant: Tridonic GmbH & Co. KG, 6851 Dornbirn (AT)
(72) Inventor: Schmölzer, Andreas, 6851 Dornbirn (AT); Zengerle, Thomas, 6851 Dornbirn (AT); Stark, Stefan, 6851 Dornbirn (AT); Hüttinger, Ulrich, 6851 Dornbirn (AT)
(74) Representative: Beder, Jens

(57) **Abstract**

A building infrastructure management system (10) is provided. Said building infrastructure management system (10) comprises multiple building infrastructure devices (11a, 11b, 11c), and a data processing device (12) configured to acquire information and/or measurement data with respect to the building infrastructure management system (10) and/or with respect to at least a part or each of the multiple building infrastructure devices (11a, 11b, 11c). The data processing device (12) is further configured to detect an anomaly with respect to the correspondingly acquired information and/or measurement data and/or with respect to the building infrastructure management system (10) and/or with respect to at least a part or each of the multiple building infrastructure devices (11a, 11b, 11c) based on a machine-learned or pre-programmed model.

## Description

The invention relates to a building infrastructure management system and a building infrastructure management method.

Generally, in times of building infrastructure becoming more and more complex, there is a growing need of a building infrastructure management system and a building infrastructure management method for managing such building infrastructure in a highly efficient manner, especially in the sense of a particularly efficient troubleshooting.

Disadvantageously, in the context of common building infrastructure management, in the case of failure of elements or parts of the corresponding building infrastructure, the corresponding error must be searched for manually, which is inefficient and expensive.

Accordingly, there is the object to provide a building infrastructure management system and a building infrastructure management method in order to allow for managing building infrastructure in a highly efficient manner, especially in the sense of a particularly efficient troubleshooting.

This object is solved by the features of the first independent claim for a building infrastructure management system and the features of the second independent claim for a building infrastructure management method. The dependent claims contain further developments.

According to a first aspect of the invention, a building infrastructure management system is provided. Said building infrastructure management system comprises multiple building infrastructure devices, and a data processing device configured to acquire information and/or measurement data with respect to the building infrastructure management system and/or with respect to at least a part or each of the multiple building infrastructure devices. The data processing device is further configured to detect an anomaly with respect to the correspondingly acquired information and/or measurement data and/or with respect to the building infrastructure management system and/or with respect to at least a part or each of the multiple building infrastructure devices based on a machine-learned or pre-programmed model.

Advantageously, building infrastructure can be managed in a highly efficient manner, especially in the sense of a particularly efficient troubleshooting. Further advantageously, an anomaly or failure, respectively, can be detected in an automated manner.

According to an implementation form of the first aspect of the invention, the building infrastructure management system comprises or is a lighting management system. In addition to this or as an alternative, the multiple building infrastructure devices comprise or are multiple lighting-associated devices.

Advantageously, for instance, lighting can reliably be provided, thereby efficiently preventing accidents.

According to an implementation form of the first aspect of the invention, especially during initial operation of the building infrastructure management system and/or of at least a part or each of the multiple building infrastructure devices, the model is trained based on the correspondingly acquired information and/or measurement data.

Advantageously, for example, the model can be trained on-the-fly.

According to an implementation form of the first aspect of the invention, the model is trained based on further information and/or measurement data, especially acquired with respect to another building infrastructure management system and/or with respect to at least a part or each of other multiple building infrastructure devices.

Advantageously, for instance, the model can be trained in advance.

According to an implementation form of the first aspect of the invention, the model is trained based on artificially generated information and/or measurement data, especially wherein said generated information and/or measurement data is generated with the aid of artificial intelligence. In addition to this or as an alternative, the model is trained with the aid of artificial intelligence.

Advantageously, for example, the model can be trained without the need of an existing building infrastructure management system.

According to an implementation form of the first aspect of the invention, especially during normal operation of the building infrastructure management system and/or of at least a part or each of the multiple building infrastructure devices, detecting the anomaly comprises detecting if at least one value of the correspondingly acquired information and/or measurement data is outside its respective expected range based on the model.

Advantageously, for instance, efficiency can further be increased.

According to an implementation form of the first aspect of the invention, especially during initial operation of the building infrastructure management system and/or of at least a part or each of the multiple building infrastructure devices and/or during normal operation of the building infrastructure management system and/or of at least a part or each of the multiple building infrastructure devices, acquiring the information and/or measurement data with respect to the building infrastructure management system and/or with respect to at least a part or each of the multiple building infrastructure devices comprises considering interactions between at least a part or each of the multiple building infrastructure devices.

Advantageously, for example, inefficiencies can further be reduced.

According to an implementation form of the first aspect of the invention, especially during normal operation of the building infrastructure management system and/or of at least a part or each of the multiple building infrastructure devices, detecting the anomaly comprises considering interactions between at least a part or each of the multiple building infrastructure devices.

Advantageously, for instance, reliability of anomaly detection can further be increased.

According to an implementation form of the first aspect of the invention, the multiple building infrastructure devices comprise at least one of a sensor, an actuator, a voltage converter, an LED driver, a luminaire, a camera, especially a security camera, a signaling device, especially an alarm device, a smoke detector, a fire sprinkler, a control device, a window shade motor, an engine door lock, an access control device, a device associated with heating and/or ventilation and/or air conditioning, an elevator or at least a part thereof, an escalator or at least a part thereof, a parking guidance system or at least a part thereof, a communication device, a server, or any combination thereof.

Advantageously, for example, a particularly high flexibility can be ensured, thereby increasing efficiency.

According to an implementation form of the first aspect of the invention, the correspondingly acquired information and/or measurement data comprises at least one of an environmental temperature, a device temperature, a temperature of a room or an area of the corresponding building, an environmental humidity, time of commissioning with respect to the building infrastructure management system and/or with respect to at least a part or each of the multiple building infrastructure devices, age of the building infrastructure management system and/or of at least a part or each of the multiple building infrastructure devices, a voltage value, a current value, a frequency value, or any combination thereof.

Advantageously, for instance, efficiency can further be increased.

According to an implementation form of the first aspect of the invention, especially during normal operation of the building infrastructure management system and/or of at least a part or each of the multiple building infrastructure devices, detecting the anomaly comprises detecting a respective failure and/or a change in the respective properties of the building infrastructure management system and/or of at least a part or each of the multiple building infrastructure devices.

Advantageously, for example, defective devices can be repaired or replaced in a particularly efficient manner.

According to an implementation form of the first aspect of the invention, especially in the case that an anomaly is detected, the data processing device is further configured to change at least one setting with respect to the building infrastructure management system and/or with respect to at least a part or each of the multiple building infrastructure devices, preferably to eliminate said anomaly.

Advantageously, for instance, anomalies can be eliminated without manual intervention.

According to an implementation form of the first aspect of the invention, especially in the case that an anomaly is detected and/or in the case that an anomaly is eliminated, the data processing device is further configured to issue a message or a warning, preferably to an operator of the building infrastructure management system.

Advantageously, for example, even for the case that an anomaly has been eliminated in an automated manner, which does not require any manual intervention by the operator, said operator can correspondingly be informed, thereby increasing reliability or operating safety, respectively, of the system.

According to an implementation form of the first aspect of the invention, in the case that an anomaly is detected based on an increased environmental temperature of a luminaire and/or of an LED driver of the multiple building infrastructure devices, the data processing device is further configured to reduce a corresponding dimming level of the luminaire and/or of the LED driver, preferably to prevent a premature failure of the luminaire and/or of the LED driver.

Advantageously, for instance, an aging rate of the luminaire and/or of the LED driver can efficiently be limited.

According to a second aspect of the invention, a building infrastructure management method is provided. Said building infrastructure management method comprises the steps of acquiring information and/or measurement data with respect to a building infrastructure management system and/or with respect to at least a part or each of multiple building infrastructure devices of the building infrastructure management system, and detecting an anomaly with respect to the correspondingly acquired information and/or measurement data and/or with respect to the building infrastructure management system and/or with respect to at least a part or each of the multiple building infrastructure devices based on a machine-learned or pre-programmed model.

Advantageously, building infrastructure can be managed in a highly efficient manner, especially in the sense of a particularly efficient troubleshooting. Further advantageously, an anomaly or failure, respectively, can be detected in an automated manner.

According to an implementation form of the second aspect of the invention, the building infrastructure management method comprises or is lighting management method, and/or the building infrastructure management system comprises or is a lighting management system, and/or the multiple building infrastructure devices comprise or are multiple lighting-associated devices.

Advantageously, for instance, lighting can reliably be provided, thereby efficiently preventing accidents.

According to an implementation form of the second aspect of the invention, the building infrastructure management method comprises the step of, especially during initial operation of the building infrastructure management system and/or of at least a part or each of the multiple building infrastructure devices, training the model based on the correspondingly acquired information and/or measurement data.

Advantageously, for example, the model can be trained on-the-fly.

According to an implementation form of the second aspect of the invention, the building infrastructure management method comprises the step of training the model based on further information and/or measurement data, especially acquired with respect to another building infrastructure management system and/or with respect to at least a part or each of other multiple building infrastructure devices.

Advantageously, for instance, the model can be trained in advance.

According to an implementation form of the second aspect of the invention, the building infrastructure management method comprises the step of training the model based on artificially generated information and/or measurement data, especially wherein said generated information and/or measurement data is generated with the aid of artificial intelligence. In addition to this or as an alternative, the building infrastructure management method comprises the step of training the model with the aid of artificial intelligence.

Advantageously, for example, the model can be trained without the need of an existing building infrastructure management system.

According to an implementation form of the second aspect of the invention, especially during normal operation of the building infrastructure management system and/or of at least a part or each of the multiple building infrastructure devices, detecting the anomaly comprises detecting if at least one value of the correspondingly acquired information and/or measurement data is outside its respective expected range based on the model.

Advantageously, for instance, efficiency can further be increased.

According to an implementation form of the second aspect of the invention, especially during initial operation of the building infrastructure management system and/or of at least a part or each of the multiple building infrastructure devices and/or during normal operation of the building infrastructure management system and/or of at least a part or each of the multiple building infrastructure devices, acquiring the information and/or measurement data with respect to the building infrastructure management system and/or with respect to at least a part or each of the multiple building infrastructure devices comprises considering interactions between at least a part or each of the multiple building infrastructure devices.

Advantageously, for example, inefficiencies can further be reduced.

According to an implementation form of the second aspect of the invention, especially during normal operation of the building infrastructure management system and/or of at least a part or each of the multiple building infrastructure devices, detecting the anomaly comprises considering interactions between at least a part or each of the multiple building infrastructure devices.

Advantageously, for instance, reliability of anomaly detection can further be increased.

According to an implementation form of the second aspect of the invention, the multiple building infrastructure devices comprise at least one of a sensor, an actuator, a voltage converter, an LED driver, a luminaire, a camera, especially a security camera, a signaling device, especially an alarm device, a smoke detector, a fire sprinkler, a control device, a window shade motor, an engine door lock, an access control device, a device associated with heating and/or ventilation and/or air conditioning, an elevator or at least a part thereof, an escalator or at least a part thereof, a parking guidance system or at least a part thereof, a communication device, a server, or any combination thereof.

Advantageously, for example, a particularly high flexibility can be ensured, thereby increasing efficiency.

According to an implementation form of the second aspect of the invention, the correspondingly acquired information and/or measurement data comprises at least one of an environmental temperature, a device temperature, a temperature of a room or an area of the corresponding building, an environmental humidity, time of commissioning with respect to the building infrastructure management system and/or with respect to at least a part or each of the multiple building infrastructure devices, age of the building infrastructure management system and/or of at least a part or each of the multiple building infrastructure devices, a voltage value, a current value, a frequency value, or any combination thereof.

Advantageously, for instance, efficiency can further be increased.

According to an implementation form of the second aspect of the invention, especially during normal operation of the building infrastructure management system and/or of at least a part or each of the multiple building infrastructure devices, detecting the anomaly comprises detecting a respective failure and/or a change in the respective properties of the building infrastructure management system and/or of at least a part or each of the multiple building infrastructure devices.

Advantageously, for example, defective devices can be repaired or replaced in a particularly efficient manner.

According to an implementation form of the second aspect of the invention, the building infrastructure management method comprises the of, especially in the case that an anomaly is detected, changing at least one setting with respect to the building infrastructure management system and/or with respect to at least a part or each of the multiple building infrastructure devices, preferably to eliminate said anomaly.

Advantageously, for instance, anomalies can be eliminated without manual intervention.

According to an implementation form of the second aspect of the invention, the building infrastructure management method comprises the step of, especially in the case that an anomaly is detected and/or in the case that an anomaly is eliminated, issuing a message or a warning, preferably to an operator of the building infrastructure management system.

Advantageously, for example, even for the case that an anomaly has been eliminated in an automated manner, which does not require any manual intervention by the operator, said operator can correspondingly be informed, thereby increasing reliability or operating safety, respectively, of the system.

According to an implementation form of the second aspect of the invention, the building infrastructure management method comprises the step of, in the case that an anomaly is detected based on an increased environmental temperature of a luminaire and/or of an LED driver of the multiple building infrastructure devices, reducing a corresponding dimming level of the luminaire and/or of the LED driver, preferably to prevent a premature failure of the luminaire and/or of the LED driver.

Advantageously, for instance, an aging rate of the luminaire and/or of the LED driver can efficiently be limited.

Exemplary embodiments of the invention are now further explained with respect to the drawings by way of example only, and not for limitation. In the drawings:
- Fig. 1: shows an exemplary embodiment of a building infrastructure management system;
- Fig. 2: shows a further exemplary embodiment of a building infrastructure management system;
- Fig. 3: illustrates a corresponding behavior of the system according to Fig. 2 for the case of no anomaly correction;
- Fig. 4: illustrates a corresponding behavior of the system according to Fig. 2 for the case of an anomaly correction; and
- Fig. 5: shows a flow chart of an embodiment of a building infrastructure management method.

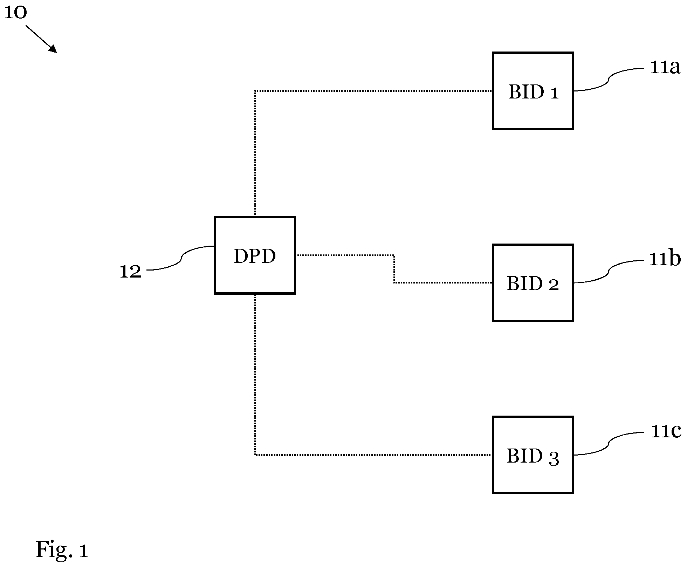

Fig. 1 illustrates an exemplary embodiment of a building infrastructure management system 10. Said building infrastructure management system 10 comprises multiple building infrastructure devices, exemplarily three building infrastructure devices 11a, 11b, 11c, and a data processing device 12 configured to acquire information and/or measurement data with respect to the building infrastructure management system 10 and/or with respect to at least a part or each of the multiple building infrastructure devices, exemplarily of the three building infrastructure devices 11a, 11b, 11c.

In this context, the data processing device 12 is further configured to detect an anomaly with respect to the correspondingly acquired information and/or measurement data and/or with respect to the building infrastructure management system 10 and/or with respect to at least a part or each of the multiple building infrastructure devices 11a, 11b, 11c based on a machine-learned or pre-programmed model.

It is noted that the building infrastructure management system 10 can especially comprise or be a lighting management system. Additionally, or alternatively, the multiple building infrastructure devices can especially comprise or be multiple lighting-associated devices. For instance, such a lighting-associated device can be at least one of an LED-based load, a converter, a voltage converter, an LED driver, a luminaire, a lighting control device, or any combination thereof.

It is further noted that it might be particularly advantageous if, especially during initial operation of the building infrastructure management system 10 and/or of at least a part or each of the multiple building infrastructure devices 11a, 11b, 11c, the model is trained based on the correspondingly acquired information and/or measurement data.

In this context, the model can be trained by teaching a newly created system, wherein at least a part or all corresponding values or parameters, respectively, are exemplarily recorded during initial operation, thus creating a corresponding training data set for the model.

Furthermore, it might be particularly advantageous if the model is trained based on further information and/or measurement data, especially acquired with respect to another building infrastructure management system and/or with respect to at least a part or each of other multiple building infrastructure devices.

In this context, it is noted that the model can exemplarily be trained on the basis of comparable projects or entire systems, respectively.

Moreover, it might be particularly advantageous if the model is trained based on artificially generated information and/or measurement data, especially wherein said generated information and/or measurement data is generated with the aid of artificial intelligence. In addition to this or as an alternative, the model can be trained with the aid of artificial intelligence.

In this context, it is noted that the model can exemplarily be trained without the need of an existing building infrastructure management system.

With respect to the data processing device 12, it is noted that said data processing device 12 can be configured to save the model locally or in an external storage, such as a cloud storage.

Furthermore, for the exemplary case that the building infrastructure management system 10 is a lighting management system as indicated above, the following advantages are notable:
Once such a model has been created and/or saved, measured values in operation and other devices present in the light management system or connected to the light management system can be recorded via the overall system. The model can thus be used to detect whether a largely arbitrary variable within the system is outside its actual expected range. This can be the case, for example, due to a change in frequency in a converter, which can result in a tendency for the corresponding luminaire to flicker. The fact that all system variables are preferably included in the model, for example room temperature, humidity or similar variables that do not depend on the operation of the individual driver, means that the evaluation is no longer limited to device-internal parameters. In particular, interactions between the individual devices can also be mapped in the underlying model and ultimately recognized, or a failure or a change in the properties of an individual device can be recognized in comparison to the other devices.

Again, with respect to the building infrastructure management system 10, it is noted that it might be particularly advantageous if, especially during normal operation of the building infrastructure management system 10 and/or of at least a part or each of the multiple building infrastructure devices 11a, 11b, 11c, detecting the anomaly comprises detecting if at least one value of the correspondingly acquired information and/or measurement data is outside its respective expected range based on the model.

Furthermore, it might be particularly advantageous if, especially during initial operation of the building infrastructure management system 10 and/or of at least a part or each of the multiple building infrastructure devices 11a, 11b, 11c and/or during normal operation of the building infrastructure management system 10 and/or of at least a part or each of the multiple building infrastructure devices 11a, 11b, 11c, acquiring the information and/or measurement data with respect to the building infrastructure management system 10 and/or with respect to at least a part or each of the multiple building infrastructure devices 11a, 11b, 11c comprises considering interactions between at least a part or each of the multiple building infrastructure devices 11a, 11b, 11c.

Moreover, it might be particularly advantageous if, especially during normal operation of the building infrastructure management system 10 and/or of at least a part or each of the multiple building infrastructure devices 11a, 11b, 11c, detecting the anomaly comprises considering interactions between at least a part or each of the multiple building infrastructure devices 11a, 11b, 11c.

With respect to the multiple building infrastructure devices or the three building infrastructure devices 11a, 11b, 11c, respectively, it is noted that the multiple building infrastructure devices can comprise at least one of a sensor, an actuator, a voltage converter, an LED driver, a luminaire, a camera, especially a security camera, a signaling device, especially an alarm device, a smoke detector, a fire sprinkler, a control device, a window shade motor, an engine door lock, an access control device, a device associated with heating and/or ventilation and/or air conditioning, an elevator or at least a part thereof, an escalator or at least a part thereof, a parking guidance system or at least a part thereof, a communication device, a server, or any combination thereof.

It is further noted that the correspondingly acquired information and/or measurement data can comprise at least one of an environmental temperature, a device temperature, a temperature of a room or an area of the corresponding building, an environmental humidity, time of commissioning with respect to the building infrastructure management system 10 and/or with respect to at least a part or each of the multiple building infrastructure devices 11a, 11b, 11c, age of the building infrastructure management system 10 and/or of at least a part or each of the multiple building infrastructure devices 11a, 11b, 11c, a voltage value, a current value, a frequency value, or any combination thereof.

Furthermore, it might be particularly advantageous if, especially during normal operation of the building infrastructure management system 10 and/or of at least a part or each of the multiple building infrastructure devices 11a, 11b, 11c, detecting the anomaly comprises detecting a respective failure and/or a change in the respective properties of the building infrastructure management system 10 and/or of at least a part or each of the multiple building infrastructure devices 11a, 11b, 11c.

It is noted that, especially in the case that an anomaly is detected, the data processing device 12 can further be configured to localize said anomaly and/or to identify which one or ones of the multiple building infrastructure devices 11a, 11b, 11c is or are affected by said anomaly.

Moreover, it might be particularly advantageous if, especially in the case that an anomaly is detected, the data processing device 12 is further configured to change at least one setting with respect to the building infrastructure management system 10 and/or with respect to at least a part or each of the multiple building infrastructure devices 11a, 11b, 11c, preferably to eliminate said anomaly.

Furthermore, it might be particularly advantageous if, especially in the case that an anomaly is detected and/or in the case that an anomaly is eliminated, the data processing device 12 is further configured to issue a message or a warning, preferably to an operator of the building infrastructure management system 10. For instance, said message or warning can comprise information regarding at least one of a location of the anomaly, which one or ones of the multiple building infrastructure devices 11a, 11b, 11c is or are affected by the anomaly, type of the anomaly, a successful elimination of the anomaly, an unsuccessful elimination attempt of the anomaly, a request to fix the anomaly manually, or any combination thereof.

Advantageously, once an anomaly has been detected and/or localized, countermeasures can be taken by the building infrastructure management system 10, preferably in an automated manner. For example, this can range from measures such as changes to the corresponding setting parameters or similar to a message or warning issued to a system operator.

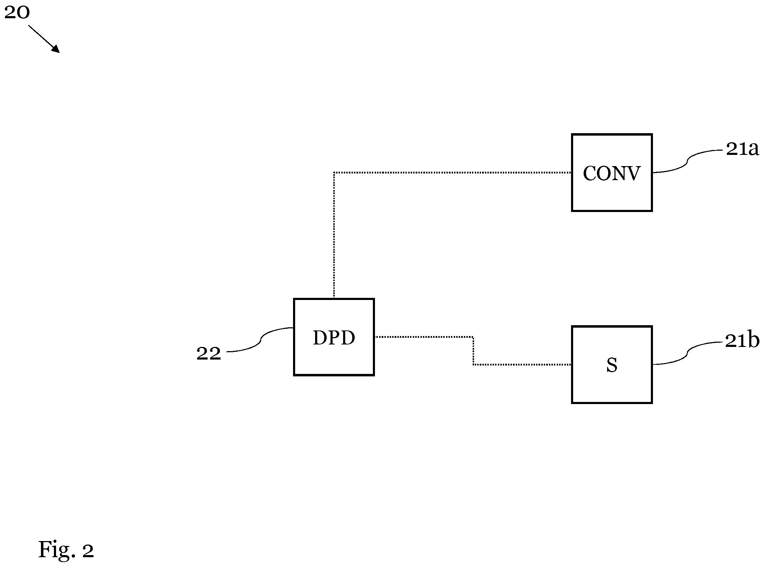

Now, with respect to Fig. 2, a further exemplary embodiment of a building infrastructure management system 20 is depicted. In particular, said system 20 exemplarily is a lighting management system 20.

Said lighting management system 20 comprises multiple lighting-associated devices, exemplarily two lighting-associated devices 21a, 21b, and a data processing device 22. It is noted that the explanations above regarding the data processing device 12 according to Fig. 1 can analogously apply for the data processing device 22 of Fig. 2, and vice versa, if applicable. It is further noted that the explanations above regarding the multiple building infrastructure devices 11a, 11b, 11c of Fig. 1 can analogously apply for the multiple lighting-associated devices 21a, 21b according to Fig. 2, and vice versa, if applicable.

As it can exemplarily be seen from Fig. 2, the multiple lighting-associated devices comprise a converter 21a or voltage converter, respectively, and a sensor 21b. For instance, the converter 21a can be a converter of a luminaire and/or an LED driver, and the sensor 21b can be temperature sensor or a temperature and humidity sensor.

The following explanations are based on said example case that the converter 21a is a converter of a luminaire and/or is an LED driver and that the sensor 21b is at least a temperature sensor. Said explanations are especially made in the context of limiting an aging rate of the converter of the luminaire or of the LED driver, respectively.

In this context, the data processing device 22 receives temperature measurement data from the sensor 21b and lifetime analysis information from the converter 21a in a wired, exemplarily via DALI, or wireless manner.

For the sake of completeness, it is noted that the sensor 21b is configured to measure the environmental or ambient temperature with respect to the converter 21a.

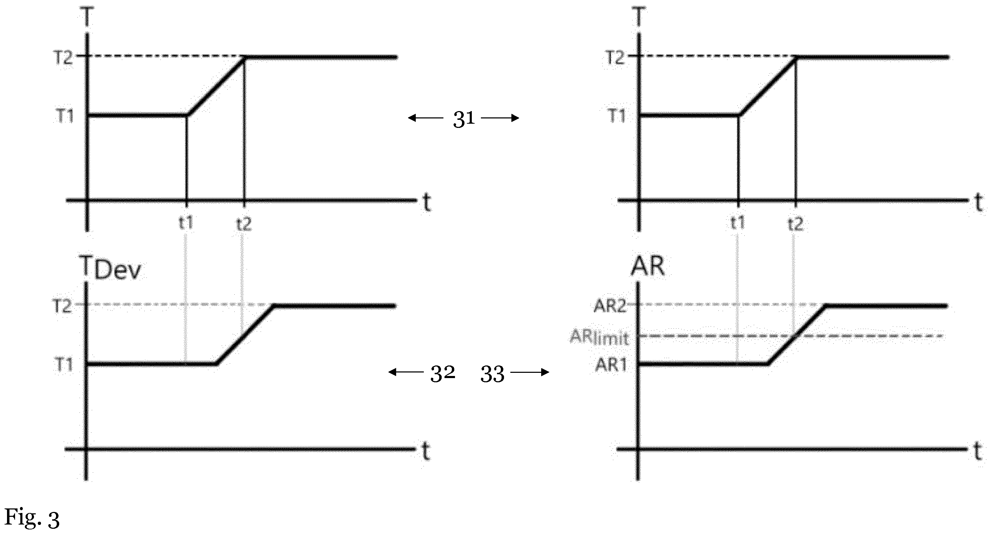

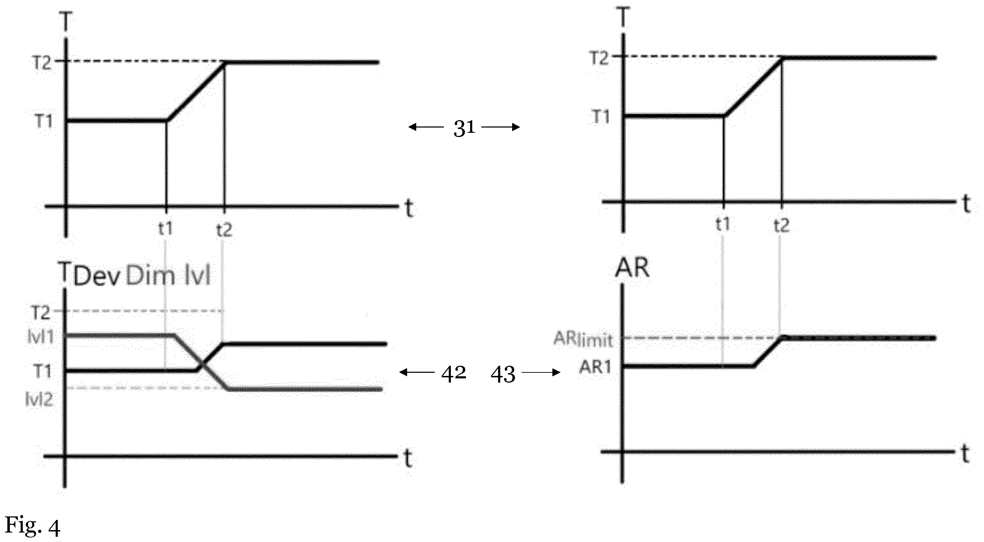

In the following, as depicted by diagram 31 of Fig. 3 or Fig. 4, respectively, it is exemplarily assumed that said environmental or ambient temperature rises from T1 to T2.

If the lighting management system 20 or the data processing device 22, respectively, does not initiate a countermeasure, the scenario according to Fig. 3 will occur.

If the environmental or ambient temperature now rises from T1 to T2, then the internal temperature TDev of the device or converter 21a, respectively, also rises in accordance with diagram 32 of Fig. 3. This rising temperature increases the temperature of at least one electrolytic capacitor of the converter 21a, thus the converter 21a ages faster. This is visible to a user as the aging rate AR increases as illustrated by diagram 33 of Fig. 3. If the user has set an aging rate limit ARlimit, especially such that a certain runtime of the converter 21a can be expected, it can happen that the converter 21a ages faster than desired (AR2>ARlimit).

With the aid of the model of the lighting management system 20 or of the data processing device 22, respectively, it is possible to derive the temperature TDev of the converter 21a or of the at least one electrolytic capacitor from the temperature T of the sensor 21b. Especially using the read out lifetime analysis information, it is now possible to calculate an aging rate for the lighting management system 20 before the temperature at the converter 21a or at the at least one electrolytic capacitor, respectively, is reached. Especially with a comparison to the maximum defined aging rate ARlimit, it is now possible for the lighting management system 20 to counteract the temperature increase.

Thanks to said model, the lighting management system 20 can set a corresponding dimming value Dimlvl according to diagram 42 of Fig. 4 in such a way that the measured temperature rise results in a maximum TDev which results in an aging rate less than or equal to the set limit (AR<=ARlimit) as illustrated by diagram 43 of Fig. 4.

Accordingly, it might be particularly advantageous if, especially in the case that an anomaly is detected based on an increased environmental temperature of a luminaire and/or of an LED driver of the multiple building infrastructure devices 11a, 11b, 11c or of the multiple lighting-associated devices 21a, 21b, respectively, the data processing device 12 or 22, respectively, is further configured to reduce a corresponding dimming level of the luminaire and/or of the LED driver, preferably to prevent a premature failure of the luminaire and/or of the LED driver.

In addition to the exemplary use case of limiting an aging rate as described above, a further exemplary use case is explained in the following. Said further exemplary use case refers to avoiding flickering.

In this context, it is exemplarily assumed that a corresponding switching frequency of an LED driver or a voltage converter, respectively, such as the converter 21a of Fig. 2, is increased although the corresponding output parameters, such as LED voltage and/or current, and/or the corresponding system parameters, such as brightness and/or temperature and/or humidity, remain the same.

With the aid of the model, such an anomaly can be recognized and it can be derived that a reason for said anomaly is a shift in the corresponding resonance frequency of the LED driver or voltage converter, respectively.

Based on the model, it can further be derived that flickering may occur if such a trend continues. For this reason, a corresponding dim level of the LED driver or voltage converter, respectively, is increased, exemplarily from 1 per cent to 2 per cent, to counteract the flickering, and/or a corresponding control parameter is changed for the respective dim level, exemplarily the 1 per cent level. Accordingly, the data processing device 12 or 22, respectively, can further be configured to increase a corresponding dim level of the LED driver or voltage converter, respectively, and/or to change a corresponding control parameter for the respective dim level. Advantageously, for instance, this ensures continued trouble-free operation without significant changes in the system. Furthermore, the corresponding operator can be informed of this anomaly at an early stage.

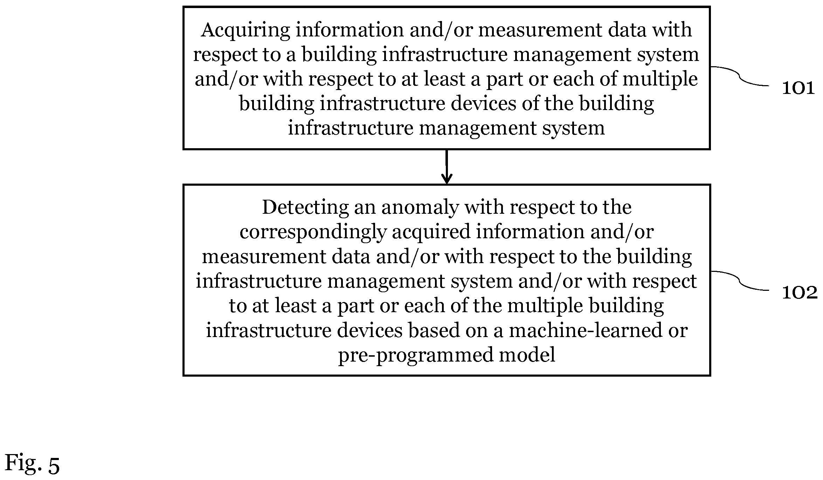

Finally, Fig. 5 illustrates a flow chart of an embodiment of a building infrastructure management method. A first step 101 comprises acquiring information and/or measurement data with respect to a building infrastructure management system, such as the system 10 of Fig. 1 or the system 20 of Fig. 2, respectively, and/or with respect to at least a part or each of multiple building infrastructure devices of the building infrastructure management system, such as the above-mentioned devices 11a, 11b, 11c, 21a, 21b. A second step 102 comprises detecting an anomaly with respect to the correspondingly acquired information and/or measurement data and/or with respect to the building infrastructure management system and/or with respect to at least a part or each of the multiple building infrastructure devices based on a machine-learned or pre-programmed model.

It is noted that said building infrastructure management method can especially be a building infrastructure management method, using a building infrastructure management system, such as the building infrastructure management system 10 according to Fig. 1 or the building infrastructure management system 20 according to Fig. 2, respectively.

Accordingly, it is further noted that step 101 and/or step 102 may especially be performed with the aid of a data processing device, such as the data processing device 12 according to Fig. 1 or the data processing device 22 according to Fig. 2, respectively.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. Building infrastructure management system (10, 20), comprising:
multiple building infrastructure devices (11a, 11b, 11c, 21a, 21b), and
a data processing device (12, 22) configured to acquire information and/or measurement data with respect to the building infrastructure management system (10, 20) and/or with respect to at least a part or each of the multiple building infrastructure devices (11a, 11b, 11c, 21a, 21b),
wherein the data processing device (12, 22) is further configured to detect an anomaly with respect to the correspondingly acquired information and/or measurement data and/or with respect to the building infrastructure management system (10, 20) and/or with respect to at least a part or each of the multiple building infrastructure devices (11a, 11b, 11c, 21a, 21b) based on a machine-learned or pre-programmed model.

2. The building infrastructure management system (10, 20) according to claim 1,
wherein the building infrastructure management system (10, 20) comprises or is a lighting management system, and/or
wherein the multiple building infrastructure devices (11a, 11b, 11c, 21a, 21b) comprise or are lighting-associated devices.

3. The building infrastructure management system (10, 20) according to claim 1 or 2,
wherein, especially during initial operation of the building infrastructure management system (10, 20) and/or of at least a part or each of the multiple building infrastructure devices (11a, 11b, 11c, 21a, 21b), the model is trained based on the correspondingly acquired information and/or measurement data.

4. The building infrastructure management system (10, 20) according to any of the claims 1 to 3,
wherein the model is trained based on further information and/or measurement data, especially acquired with respect to another building infrastructure management system and/or with respect to at least a part or each of other multiple building infrastructure devices.

5. The building infrastructure management system (10, 20) according to any of the claims 1 to 4,
wherein the model is trained based on artificially generated information and/or measurement data, especially wherein said generated information and/or measurement data is generated with the aid of artificial intelligence, and/or
wherein the model is trained with the aid of artificial intelligence.

6. The building infrastructure management system (10, 20) according to any of the claims 1 to 5,
wherein, especially during normal operation of the building infrastructure management system (10, 20) and/or of at least a part or each of the multiple building infrastructure devices (11a, 11b, 11c, 21a, 21b), detecting the anomaly comprises detecting if at least one value of the correspondingly acquired information and/or measurement data is outside its respective expected range based on the model.

7. The building infrastructure management system (10, 20) according to any of the claims 1 to 6,
wherein, especially during initial operation of the building infrastructure management system (10, 20) and/or of at least a part or each of the multiple building infrastructure devices (11a, 11b, 11c, 21a, 21b) and/or during normal operation of the building infrastructure management system (10, 20) and/or of at least a part or each of the multiple building infrastructure devices (11a, 11b, 11c, 21a, 21b), acquiring the information and/or measurement data with respect to the building infrastructure management system (10, 20) and/or with respect to at least a part or each of the multiple building infrastructure devices (11a, 11b, 11c, 21a, 21b) comprises considering interactions between at least a part or each of the multiple building infrastructure devices (11a, 11b, 11c, 21a, 21b).

8. The building infrastructure management system (10, 20) according to any of the claims 1 to 7,
wherein, especially during normal operation of the building infrastructure management system (10, 20) and/or of at least a part or each of the multiple building infrastructure devices (11a, 11b, 11c, 21a, 21b), detecting the anomaly comprises considering interactions between at least a part or each of the multiple building infrastructure devices (11a, 11b, 11c, 21a, 21b).

9. The building infrastructure management system (10, 20) according to any of the claims 1 to 8,
wherein the multiple building infrastructure devices (11a, 11b, 11c, 21a, 21b) comprise at least one of a sensor, an actuator, a voltage converter, an LED driver, a luminaire, a camera, especially a security camera, a signaling device, especially an alarm device, a smoke detector, a fire sprinkler, a control device, a window shade motor, an engine door lock, an access control device, a device associated with heating and/or ventilation and/or air conditioning, an elevator or at least a part thereof, an escalator or at least a part thereof, a parking guidance system or at least a part thereof, a communication device, a server, or any combination thereof.

10. The building infrastructure management system (10, 20) according to any of the claims 1 to 9,
wherein the correspondingly acquired information and/or measurement data comprises at least one of an environmental temperature, a device temperature, a temperature of a room or an area of the corresponding building, an environmental humidity, time of commissioning with respect to the building infrastructure management system (10, 20) and/or with respect to at least a part or each of the multiple building infrastructure devices (11a, 11b, 11c, 21a, 21b), age of the building infrastructure management system (10, 20) and/or of at least a part or each of the multiple building infrastructure devices (11a, 11b, 11c, 21a, 21b), a voltage value, a current value, a frequency value, or any combination thereof.

11. The building infrastructure management system (10, 20) according to any of the claims 1 to 10,
wherein, especially during normal operation of the building infrastructure management system (10, 20) and/or of at least a part or each of the multiple building infrastructure devices (11a, 11b, 11c, 21a, 21b), detecting the anomaly comprises detecting a respective failure and/or a change in the respective properties of the building infrastructure management system (10, 20) and/or of at least a part or each of the multiple building infrastructure devices (11a, 11b, 11c, 21a, 21b).

12. The building infrastructure management system (10, 20) according to any of the claims 1 to 11,
wherein, especially in the case that an anomaly is detected, the data processing device (12, 22) is further configured to change at least one setting with respect to the building infrastructure management system (10, 20) and/or with respect to at least a part or each of the multiple building infrastructure devices (11a, 11b, 11c, 21a, 21b), preferably to eliminate said anomaly.

13. The building infrastructure management system (10, 20) according to any of the claims 1 to 12,
wherein, especially in the case that an anomaly is detected and/or in the case that an anomaly is eliminated, the data processing device (12, 22) is further configured to issue a message or a warning, preferably to an operator of the building infrastructure management system (10, 20).

14. The building infrastructure management system (10, 20) according to any of the claims 1 to 13,
wherein, in the case that an anomaly is detected based on an increased environmental temperature of a luminaire and/or of an LED driver of the multiple building infrastructure devices (11a, 11b, 11c, 21a, 21b), the data processing device (12, 22) is further configured to reduce a corresponding dimming level of the luminaire and/or of the LED driver, preferably to prevent a premature failure of the luminaire and/or of the LED driver.

15. Building infrastructure management method, comprising the steps of:
acquiring (101) information and/or measurement data with respect to a building infrastructure management system and/or with respect to at least a part or each of multiple building infrastructure devices of the building infrastructure management system, and
detecting (102) an anomaly with respect to the correspondingly acquired information and/or measurement data and/or with respect to the building infrastructure management system and/or with respect to at least a part or each of the multiple building infrastructure devices based on a machine-learned or pre-programmed model.
